(19) **Europäisches Patentamt / European Patent Office / Office européen des brevets**

(11) **EP 4 460 449 B1**

(12) **FASCICULE DE BREVET EUROPEEN**

(45) Date de publication et mention de la délivrance du brevet:
**27.08.2025 Bulletin 2025/35**

(21) Numéro de dépôt: **22840248.3**

(22) Date de dépôt: **29.11.2022**

(51) Classification Internationale des Brevets (IPC):
**B60W 40/04** *(2006.01)*    **B60W 50/00** *(2006.01)*
**B60W 30/18** *(2012.01)*    **B60W 30/17** *(2020.01)*

(52) Classification Coopérative des Brevets (CPC):
**B60W 40/04; B60W 30/17; B60W 30/181; B60W 50/0097;** B60W 2554/4042; B60W 2710/20; B60W 2720/106

(86) Numéro de dépôt international:
**PCT/FR2022/052196**

(87) Numéro de publication internationale:
**WO 2023/131752 (13.07.2023 Gazette 2023/28)**

(54) **PROCÉDÉ D'AIDE À LA CONDUITE D'UN VÉHICULE AUTOMOBILE, DISPOSITIF ET VÉHICULE ASSOCIÉS**

VERFAHREN ZUR UNTERSTÜTZUNG DES FAHRENS EINES KRAFTFAHRZEUGS, ZUGEHÖRIGE VORRICHTUNG UND FAHRZEUG

METHOD FOR ASSISTING WITH DRIVING A MOTOR VEHICLE, ASSOCIATED DEVICE AND VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.01.2022 FR 2200058**

(43) Date de publication de la demande:
**13.11.2024 Bulletin 2024/46**

(73) Titulaire: **Stellantis Auto SAS
78300 Poissy (FR)**

(72) Inventeur: **VIVET, Luc
75016 PARIS 16 (FR)**

(74) Mandataire: **ESIP
Stellantis Auto SAS
Service REIP - YT800
43, rue Jean Pierre Timbaud
78300 Poissy (FR)**

(56) Documents cités:
**DE-A1- 102009 042 309     DE-A1- 102012 002 695
US-A1- 2020 159 234**

• **ITOH YUTARO ET AL: "Real-Time Operational Driving Energy Management with Stochastic Vehicles Behavior Prediction", 2020 IEEE INTELLIGENT VEHICLES SYMPOSIUM (IV), IEEE, 19 October 2020 (2020-10-19), pages 2140 - 2145, XP033872809, DOI: 10.1109/ IV47402.2020.9304533**

## Description

L'invention concerne l'aide à la conduite d'un véhicule automobile.

Aujourd'hui, Il existe un certain nombre d'aides à la conduite (ou d'automatismes de conduite) permettant une adaptation automatique (ou semi-automatique) de la vitesse ou de la trajectoire d'un véhicule en fonction de l'environnement du véhicule.

L'état de la technique est connu du document DE102009042309A1, du document « Real-Time Operational Driving Energy Management with Stochastic Vehicles Behavior Prediction » Itoh Yutaro et al., 2020 IEEE intelligent vehicles symposium (IV), 19 octobre 2020, pages 2140-2145, DOI : 10.1109/IV47402.2020.9304533 et du document US2020159234A1 correspondant au préambule de la revendication 1.

Il existe un besoin d'améliorer l'attractivité de ces aides à la conduite et le confort qu'elles apportent.

Dans ce but, l'invention concerne un procédé d'aide à la conduite d'un premier véhicule automobile (appelé aussi ego-véhicule) comportant les étapes suivantes :

- Détermination d'une probabilité qu'un deuxième véhicule soit en train de s'arrêter, à partir d'une deuxième vitesse du deuxième véhicule, et d'une deuxième accélération du deuxième véhicule (la deuxième accélération est une vitesse de variation de la deuxième vitesse) ,
- Transmission d'une commande de conduite pour commander le premier véhicule à partir de la probabilité (autrement dit : Transmission d'une commande de conduite pour commander le premier véhicule, la commande étant déterminée à partir de la probabilité),

caractérisé en ce que la probabilité est une première fonction décroissante d'un temps d'arrêt du deuxième véhicule (le temps d'arrêt étant) (à un instant donné), estimé à partir d'une fraction comprenant au numérateur la deuxième vitesse du deuxième véhicule, et au dénominateur, la deuxième accélération du deuxième véhicule, de manière à ce que le temps d'arrêt estimé soit une deuxième fonction croissante de la deuxième vitesse et décroissante d'un opposé de la deuxième accélération (l'opposé a ici le sens mathématique habituel : l'opposé d'un nombre n est le nombre qui, ajouté à n, donne zéro).

Ainsi, lorsque le deuxième véhicule est à basse vitesse et en train de freiner, l'opposé de la deuxième accélération est grand devant la deuxième vitesse. Le temps d'arrêt du deuxième véhicule estimé est alors petit, donc la probabilité que le deuxième véhicule est en train de s'arrêter est élevée.

Inversement, lorsque le deuxième véhicule est à haute vitesse et en train de freiner, l'opposé de deuxième accélération est petit devant la deuxième vitesse. Le temps d'arrêt du deuxième véhicule estimé est alors grand, donc la probabilité que le deuxième véhicule est en train de s'arrêter est faible. En effet, durant un temps d'arrêt estimé du deuxième véhicule qui est long, des évènements peuvent avoir pour conséquence que le deuxième véhicule ne s'arrête pas.

Ainsi, par exemple, la deuxième vitesse ou la première est comprise entre 0 et 10 ou 20 kilomètres par heure.

L'invention permet donc d'anticiper, à basse vitesse, l'arrêt du deuxième véhicule, de manière à améliorer les réactions du système d'aide à la conduite.

Selon un mode de réalisation, la commande de conduite commande une première accélération du premier véhicule ou une direction de déplacement du premier véhicule.

Par exemple, la commande de conduite comprend par exemple une commande de ralentissement (par exemple, commandant le freinage ou une diminution de la puissance délivrée par un moteur destiné à mouvoir le premier véhicule). La commande de conduite peut être transmise au système de freinage du premier véhicule, ou au moteur.

Selon un mode de réalisation, le temps d'arrêt estimé du deuxième véhicule est égal à (autrement dit, la fraction s'écrit de la manière suivante) :

$$tStop(t) = -\frac{V(t) + espV\_C}{Accel(t) - epsA\_C}$$

Où :

- $V(t)$ représente la deuxième vitesse à l'instant t, les mètres sont notés m, en m.s$^{-1}$,

- $Accel(t)$ représente la deuxième accélération à l'instant t, en m.s$^{-2}$ (de manière générale, la deuxième accélération est négative puisque le deuxième véhicule ralenti),

- $epsA\_C$ et $espV\_C$ sont des constantes, et

- *tStop(t)* est le temps d'arrêt estimé du deuxième véhicule (100, 200) à un instant t, en secondes notées s.

La mesure de la deuxième vitesse ou de la deuxième accélération est par exemple réalisée par le premier véhicule.

Il arrive que la mesure de *v(t)* ou de *Accel(t),* ait une fable valeur négative du fait d'erreurs de mesure. *espV_C* sert à rendre le numérateur toujours positif malgré ces erreurs de mesure. *epsA_C* sert à rendre le dénominateur toujours positif malgré ces erreurs de mesure.

Par exemple, la probabilité est égale à (autrement dit, la première fonction s'exprime de la manière suivante) :

$$pStop(t) = \frac{1}{1 + \dfrac{t1Stop(t)}{tRef\_C}}$$

Où :

- *t1Stop(t)* est le temps d'arrêt estimé du deuxième véhicule à l'instant t, en secondes notées s,

- *tRef_C* est une constante, et

- *pStop(t)* est la probabilité que le deuxième véhicule soit en train de s'arrêter à un instant t.

Par exemple, *t1Stop(t) = tStop(t),* mais *t1Stop(t)* peut bien entendu avoir différentes formes.

*tRef_C* permet de calibrer *pStop(t).* En effet, *tRef_C* est le temps d'arrêt estimé lorsque la probabilité est égale à 0,5.

Par exemple, le deuxième véhicule précède le premier véhicule sur une route.

On entend que le deuxième véhicule précède le premier véhicule quand le deuxième véhicule est sur la même voie que le premier véhicule en passant par le(s) même(s) point(s) de la route que le premier véhicule, avant le premier véhicule.

Le deuxième véhicule est détecté par le premier véhicule, par exemple par une caméra (ou radar ou laser) du premier véhicule.

En variante, le deuxième véhicule est le premier véhicule.

Selon un mode de réalisation, le premier véhicule roulant sur la route à une première vitesse supérieure à la deuxième vitesse, l'étape de transmission d'une commande de conduite comportant les étapes suivantes :

- Détermination d'une accélération primaire du premier véhicule de manière à ce que le premier véhicule atteigne la deuxième vitesse et soit positionné à une distance de sécurité (par exemple, égale à 3 mètres) du deuxième véhicule,

- Détermination de la première accélération à partir de la probabilité et de l'accélération primaire, la commande de conduite commandant la première accélération.

A faible vitesse du premier véhicule par exemple, par exemple à des vitesses inférieures à 10 ou 20 kilomètres par heure (et par exemple supérieures à 0 kilomètres par heure), il est particulièrement difficile pour le système d'aide à la conduite d'émettre une commande de conduite pour commander l'arrêt du premier véhicule à une distance faible du deuxième véhicule, par exemple comprise entre 2 et 4 mètres, par exemple égale à 3 mètres. L'invention permet donc par exemple de remédier à cette difficulté en permettant au premier véhicule d'anticiper son arrêt à partir de la probabilité.

En variante, la commande de conduite commande l'activation de feux de détresse sur le premier véhicule, par exemple si la probabilité que le premier véhicule est en train de s'arrêter est supérieure à un seuil.

Selon un mode de réalisation, la première accélération est égale à :

*Première_acceleration(t) = (1+kStop_C )x p1Stop(t)) x Acceleration_primaire(t)*

Où :

- *p1Stop(t)* est la probabilité à un instant t,

- *Acceleration_primaire(t)* est l'accélération primaire, en m.s$^{-1}$,

- *kStop_C* est une constante, par exemple égal à 0,1, et

- *Première_acceleration(t)* est la première accélération, les mètres étant notés m, les secondes étant notées s, en m.s$^{-1}$.

Selon un mode de réalisation, *p1Stop(t) = pStop(t),* mais *t1Stop(t)* peut bien entendu avoir différentes autres formes.

Bien entendu, la première accélération peut être différente que ci-dessus.

L'invention concerne également un programme d'ordinateur comprenant des instructions, exécutables par un microprocesseur ou un microcontroller, pour la mise en œuvre du procédé selon l'invention.

Le procédé selon l'invention est par exemple mis en œuvre par un dispositif électronique. L'invention concerne donc aussi un dispositif électronique configuré pour mettre en œuvre les étapes du procédé selon l'invention, et un véhicule automobile comprenant le dispositif électronique.

Les caractéristiques et avantages du dispositif électronique, du véhicule automobile et du programme d'ordinateur sont identiques à ceux du procédé, c'est pourquoi, ils ne sont pas repris ici.

On entend qu'un élément tel que le dispositif électronique, ou un autre élément est « configuré pour » réaliser une étape ou une opération, par le fait que l'élément comporte des moyens pour (autrement dit « est conformé pour » ou « est adapté pour ») réaliser l'étape ou l'opération. Il s'agit préférentiellement de moyens électroniques, par exemple d'un programme d'ordinateur, de données en mémoire et/ou de circuits électroniques spécialisés.

Lorsqu'une étape ou une opération est réalisée par un tel élément, cela implique généralement que l'élément comporte des moyens pour (autrement dit « est conformé pour » ou « est adapté pour » ou « est configuré pour ») réaliser l'étape ou l'opération. Il s'agit également par exemple de moyens électroniques, par exemple un programme d'ordinateur, des données en mémoire et/ou des circuits électroniques spécialisés.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels.

[Fig. 1] représente un dispositif électronique d'un véhicule automobile selon un mode de réalisation de l'invention.

[Fig. 2] représente le procédé de l'invention, selon un exemple de réalisation, mis en œuvre notamment par le dispositif électronique de la figure 1.

Description détaillée d'un exemple de réalisation de l'invention

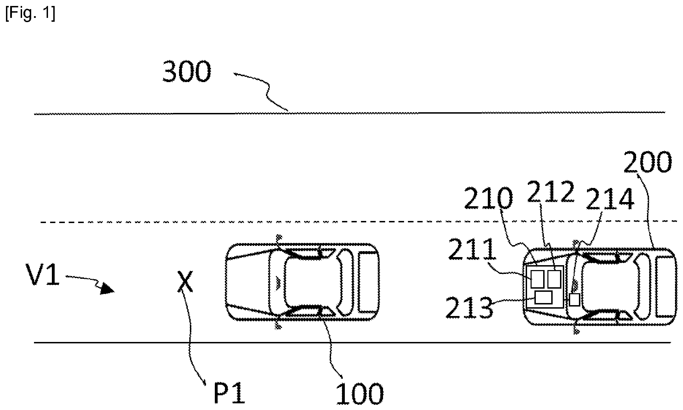

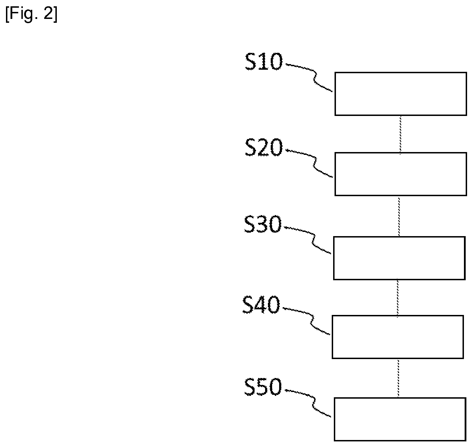

En référence aux figure 1 et 2, à l'étape S10, un dispositif électronique 210 d'un premier véhicule 200, roulant à une première vitesse sur une route 300, détecte un deuxième véhicule 100, roulant à une deuxième vitesse sur la route 300, et précédant le premier véhicule 200 sur une route 300.

On entend que le deuxième véhicule 100 précède le premier véhicule 200 quand le deuxième véhicule 100 est sur la même voie V1 que le premier véhicule 200 en passant par le même point P1 de la route 300 que le premier véhicule 200, avant le premier véhicule 200.

Le deuxième véhicule 100 est détecté par le premier véhicule 200, par exemple par une caméra 211 (ou un radar ou un laser du premier véhicule 200.

A l'étape S20, le dispositif électronique 210 détermine une accélération primaire du premier véhicule 200 de manière à ce que le premier véhicule 200 atteigne la deuxième vitesse et soit positionné à une distance de sécurité (par exemple, 3 mètres) du deuxième véhicule 100.

A l'étape S30, le dispositif électronique 210 détermine une probabilité que le deuxième véhicule 100 soit en train de s'arrêter

A l'étape S40, le dispositif électronique 210 détermine une première accélération à partir de la probabilité et de l'accélération primaire.

A l'étape S50, le dispositif électronique 210 transmet une commande de conduite commandant la première accélération du premier véhicule 200. Par exemple, la commande de conduite comprend par exemple une commande de ralentissement (par exemple, commandant le freinage ou une diminution de la puissance délivrée par un moteur destiné à mouvoir le premier véhicule sur la route) La commande de conduite peut être transmise au système de freinage du premier véhicule, ou au moteur.

Par exemple, la première accélération à l'instant t est égale à :

$$\textit{Première\_acceleration(t)} = 1{,}1 \times \textit{pStop(t)} \times \textit{Acceleration\_primaire(t)}$$

Où :

- *pStop(t)* est la probabilité à un instant t,

- *Acceleration_primaire(t)* est l'accélération primaire, en m.s$^{-1}$.

Selon un exemple de réalisation, la probabilité à l'instant t est égale à :

$$pStop(t) = \frac{1}{1 + \frac{tStop(t)}{0,5}}$$

Où :

- *tStop(t)* est le temps d'arrêt estimé du deuxième véhicule 100 à l'instant t.

Par exemple, le temps d'arrêt estimé du deuxième véhicule 100, en s, à l'instant t, est égale à :

$$tStop(t) = -\frac{V(t) + 1}{Accel(t) - 0,5}$$

Où :

- *V(t)* représente une deuxième vitesse du deuxième véhicule 100 à l'instant t, en m.s$^{-1}$,

- *Accel(t)* représente une deuxième accélération du deuxième véhicule à l'instant t, en m.s$^{-2}$.

Le dispositif électronique comprend par exemple des moyens pour (autrement dit « est conformé pour » ou « est adapté pour » ou « configuré pour ») réaliser les étapes S10 à S50. Il s'agit préférentiellement de moyens électroniques, par exemple d'un programme d'ordinateur, des données en mémoire, un microprocesseur, un micro-contrôleur et/ou de circuits électroniques spécialisés. Ainsi, le dispositif électronique 210 peut comporter un programme d'ordinateur comprenant des instructions exécutables par un microprocesseur ou un microcontroller du dispositif électronique 210 pour mettre en œuvre les étapes S10 à S50.

## Revendications

1. Procédé d'aide à la conduite d'un premier véhicule automobile (200) comportant les étapes suivantes :

   - Détermination (S30) d'une probabilité qu'un deuxième véhicule (100, 200) soit en train de s'arrêter, à partir d'une deuxième vitesse du deuxième véhicule (100, 200), et d'une deuxième accélération du deuxième véhicule (100, 200);
   - Transmission (S50) d'une commande de conduite pour commander le premier véhicule (200) à partir de la probabilité ;

   **caractérisé en ce que** la probabilité est une première fonction décroissante d'un temps d'arrêt du deuxième véhicule (100, 200), estimé à partir d'une fraction comprenant au numérateur la deuxième vitesse du deuxième véhicule (100, 200), et au dénominateur, la deuxième accélération du deuxième véhicule (100, 200), de manière à ce que le temps d'arrêt estimé soit une deuxième fonction croissante de la deuxième vitesse et décroissante d'un opposé de la deuxième accélération.

2. Procédé d'aide à la conduite selon la revendication précédente dans lequel la commande de conduite commande une première accélération du premier véhicule (200) ou une direction de déplacement du premier véhicule (200).

3. Procédé d'aide à la conduite selon l'une quelconque des revendications précédentes dans lequel le temps d'arrêt estimé du deuxième véhicule (100, 200) est égale à :

$$tStop(t) = -\frac{V(t) + espV\_C}{Accel(t) - epsA\_C}$$

Où :

- $V(t)$ représente la deuxième vitesse à l'instant t, les mètres étant notés m, en m.s$^{-1}$,
- $Accel(t)$ représente la deuxième accélération à l'instant t, en m.s$^{-2}$,
- $epsA\_C$ et $espV\_C$ sont des constantes, et
- $tStop(t)$ est le temps d'arrêt estimé du deuxième véhicule (100, 200) à un instant t, en secondes notées s.

4. Procédé d'aide à la conduite selon l'une quelconque des revendications précédentes dans lequel la probabilité est égale à :

$$pStop(t) = \frac{1}{1 + \dfrac{t1Stop(t)}{tRef\_C}}$$

Où :

- $t1Stop(t)$ est le temps d'arrêt estimé du deuxième véhicule (100, 200) à l'instant t, en secondes notées s,
- $tRef\_C$ est une constante, et
- $pStop(t)$ est la probabilité que le deuxième véhicule (100, 200) soit en train de s'arrêter à un instant t.

5. Procédé d'aide à la conduite selon l'une quelconque des revendications précédentes dans lequel le deuxième véhicule (100) précède le premier véhicule (200) sur une route (300)

6. Procédé d'aide à la conduite selon la revendication précédente, prise en dépendance de la revendication 2, le premier véhicule (200) roulant sur la route (300) à une première vitesse supérieure à la deuxième vitesse, l'étape de transmission d'une commande de conduite comportant les étapes suivantes :

- Détermination d'une accélération primaire du premier véhicule (200) de manière à ce que le premier véhicule (200) atteigne la deuxième vitesse et soit positionné à une distance de sécurité (s) du deuxième véhicule (100),
- Détermination de la première accélération à partir de la probabilité et de l'accélération primaire, la commande de conduite commandant la première accélération,

dans lequel la première accélération est égale à :

$Première\_acceleration(t) = (1+kStop\_C )\times p1Stop(t)) \times Acceleration\_primaire(t)$

Où :

- $p1Stop(t)$ est la probabilité à un instant t,
- $Acceleration\_primaire(t)$ est l'accélération primaire, en m.s$^{-2}$,
- $kStop\_C$ est une constante, et
- $Première\_acceleration(t)$ est la première accélération, les mètres étant notés m, les secondes étant notées s, en m.s$^{-2}$.

7. Programme d'ordinateur comprenant des instructions qui, lorsque le programme est exécuté par un microprocesseur ou un microcontroller, conduisent celui-ci à mettre en œuvre un procédé selon l'une quelconque des revendications 1 à 6.

8. Dispositif électronique (210) configuré pour mettre en œuvre les étapes du procédé selon l'une quelconque des revendications 1 à 6.

9. Véhicule automobile (200) comprenant le dispositif électronique (210) selon la revendication précédente.

**Patentansprüche**

1. Verfahren zur Unterstützung des Fahrers eines ersten Kraftfahrzeugs (200), umfassend die folgenden Schritte:

   - Bestimmung (S30) der Wahrscheinlichkeit, dass ein zweites Fahrzeug (100, 200) zum Stillstand kommt, aus einer zweiten Geschwindigkeit des zweiten Fahrzeugs (100, 200) und einer zweiten Beschleunigung des zweiten Fahrzeugs (100, 200);
   - Getriebe (S50) einer Fahrsteuerung zur Steuerung des ersten Fahrzeugs (200) von der Wahrscheinlichkeit;

   **dadurch gekennzeichnet, dass** die Wahrscheinlichkeit eine erste abnehmende Funktion einer Stoppzeit des zweiten Fahrzeugs (100, 200) ist, die aus einem Bruch geschätzt wird, der im Zähler die zweite Geschwindigkeit des zweiten Fahrzeugs (100, 200) und im Nenner die zweite Beschleunigung des zweiten Fahrzeugs (100, 200) umfasst, so dass die geschätzte Stoppzeit eine zweite zunehmende Funktion der zweiten Geschwindigkeit und abnehmend eines Gegenteils der zweiten Beschleunigung ist.

2. Fahrassistenzverfahren nach dem vorhergehenden Ansprüche, wobei die Fahrsteuerung eine erste Beschleunigung des ersten Fahrzeugs (200) oder eine Fahrtrichtung des ersten Fahrzeugs (200) befiehlt.

3. Fahrerassistenzverfahren nach einem der vorhergehenden Ansprüche, wobei die geschätzte Anhaltezeit des zweiten Fahrzeugs (100, 200) gleich ist:

$$tStop(t) = -\frac{V(t) + espV\_C}{Accel(t) - epsA\_C}$$

   Wo:

   - *V(t)* stellt die zweite Geschwindigkeit zum Zeitpunkt t dar, wobei die Meter als m bezeichnet werden, in m.s-1,
   - *Accel(t)* stellt die zweite Beschleunigung zum Zeitpunkt t dar, in m.s-2,
   - *epsA_C und espV_C* Konstanten sind und
   - *tStop(t)* ist die geschätzte Stoppzeit des zweiten Fahrzeugs (100, 200) zu einem Zeitpunkt t, der als s bezeichnet wird.

4. Verfahren zur Unterstützung des Fahrers nach einem der vorhergehenden Ansprüche, wobei die Wahrscheinlichkeit gleich ist:

$$pStop(t) = \frac{1}{1 + \frac{t1Stop(t)}{tRef\_C}}$$

   Wo:

   - *t1Stop(t)* ist die geschätzte Haltezeit des zweiten Fahrzeugs (100, 200) zum Zeitpunkt t in Sekunden, die als s bezeichnet wird,
   - *tRef_C* eine Konstante ist und
   - *pStop(t)* ist die Wahrscheinlichkeit, dass das zweite Fahrzeug (100, 200) zu einem Zeitpunkt t zum Stillstand kommt.

5. Verfahren zur Fahrerassistenz nach einem der vorhergehenden Ansprüche, wobei das zweite Fahrzeug (100) dem ersten Fahrzeug (200) auf einer Straße (300) vorausgeht

6. Verfahren zur Unterstützung des Fahrers nach dem vorhergehenden Anspruch, abhängig von Anspruch 2, wobei das erste Fahrzeug (200) auf der Straße fährt (300) in einem ersten Gang über dem zweiten Gang, wobei der Schritt der Übertragung eines Fahrbefehls folgende Schritte umfasst:

   - Bestimmung einer Primärbeschleunigung des ersten Fahrzeugs (200), so dass das erste Fahrzeug (200) den zweiten Gang erreicht und sich in einem oder mehreren sicheren Abständen zum zweiten Fahrzeug (100) befindet,
- Bestimmung der ersten Beschleunigung aus der Wahrscheinlichkeit und der Primärbeschleunigung, wobei die Fahrsteuerung die erste Beschleunigung steuert,

wobei die erste Beschleunigung gleich ist:

*Première_acceleration(t)* = (1+kStop_C )x *p1Stopp(t)*) x *Acceleration_primaire(t)*

Wo:

- *p1Stop(t)* ist die Wahrscheinlichkeit zu einem Zeitpunkt t,
- *Acceleration_primaire(t)* ist die primäre Beschleunigung in m.s-2,
- *kStop_C* ist eine Konstante, und
- *Première_acceleration (t)* ist die erste Beschleunigung, wobei die Meter als m, die Sekunden als s bezeichnet werden, in m.s-2.

7. Computerprogramm mit Anweisungen, die, wenn das Programm von einem Mikroprozessor oder Mikrocontroller ausgeführt wird, den Mikroprozessor oder Mikrocontroller veranlassen, ein Verfahren nach einem der Ansprüche 1 bis 6 auszuführen.

8. Elektronische Vorrichtung (210), konfiguriert zum Ausführen der Verfahrensschritte nach einem der Ansprüche 1 bis 6.

9. Kraftfahrzeug (200), das die elektronische Vorrichtung (210) gemäß dem vorhergehenden Anspruch umfasst.

**Claims**

1. A method for assisting the driver of a first motor vehicle (200) comprising the following steps:

   - Determination (S30) of a probability that a second vehicle (100, 200) is coming to a stop, from a second speed of the second vehicle (100, 200), and a second acceleration of the second vehicle (100, 200);
   - Transmission (S50) of a driving control to control the first vehicle (200) from the probability;

   **characterized in that** the probability is a first decreasing function of a stopping time of the second vehicle (100, 200), estimated from a fraction comprising in the numerator the second speed of the second vehicle (100, 200), and in the denominator, the second acceleration of the second vehicle (100, 200), such that the estimated stopping time is a second increasing function of the second speed and decreasing of an opposite of the second acceleration.

2. A driving assistance method according to the preceding claim wherein the driving control commands a first acceleration of the first vehicle (200) or a direction of travel of the first vehicle (200).

3. A driver assistance method according to any one of the preceding claims wherein the estimated stopping time of the second vehicle (100, 200) is equal to:

$$tStop(t) = -\frac{V(t) + espV\_C}{Accel(t) - epsA\_C}$$

Where:

- *V(t)* represents the second velocity at time t, the meters being denoted m, in m.s-1,
- *Accel(t)* represents the second acceleration at time t, in m.s-2,
- *epsA_C and espV_C* are constants, and
- *tStop(t)* is the estimated stopping time of the second vehicle (100, 200) at a time t, in seconds denoted s.

4. A method for assisting the driver according to any one of the preceding claims wherein the probability is equal to:

$$pStop(t) = \frac{1}{1 + \dfrac{t1Stop(t)}{tRef\_C}}$$

Where:

- $t1Stop(t)$ is the estimated stopping time of the second vehicle (100, 200) at time t, in seconds denoted s,
- $tRef\_C$ is a constant, and
- $pStop(t)$ is the probability that the second vehicle (100, 200) is coming to a stop at a time t.

5. A method of driver assistance according to any one of the preceding claims wherein the second vehicle (100) precedes the first vehicle (200) on a road (300)

6. A method of assisting the driver according to the preceding claim, dependent on claim 2, the first vehicle (200) travelling on the road (300) at a first gear above the second gear, the step of transmitting a driving command comprising the following steps:

- Determination of a primary acceleration of the first vehicle (200) such that the first vehicle (200) reaches the second gear and is positioned at a safe distance(s) from the second vehicle (100),
- Determination of the first acceleration from the probability and the primary acceleration, with the driving control controlling the first acceleration,

wherein the first acceleration is equal to:

*Première_acceleration(t) = (1+kStop_C )x p1Stop(t)) x Acceleration_primaire(t)*

Where:

- *p1Stop(t)* is the probability at a time t,
- *Acceleration_primaire(t)* is the primary acceleration, in m.s-2,
- *kStop_C* is a constant, and
- *Première_acceleration(t)* is the first acceleration, the meters being denoted m, the seconds being denoted s, in m.s-2.

7. A computer program comprising instructions which, when the program is executed by a microprocessor or microcontroller, cause the microprocessor or microcontroller to carry out a method according to any one of claims 1 to 6.

8. An electronic device (210) configured to carry out the process steps according to any one of claims 1 to 6.

9. A motor vehicle (200) comprising the electronic device (210) according to the preceding claim.

[Fig. 1]

[Fig. 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102009042309 A1

- US 2020159234 A1

**Littérature non-brevet citée dans la description**

- **ITOH YUTARO et al.** *2020 IEEE intelligent vehicles symposium (IV)*, 19 October 2020, 2140-2145